# EUROPÄISCHE PATENTANMELDUNG

(11) **EP 0 902 251 A2**
(43) Veröffentlichungstag der Anmeldung: **17.03.1999**
(21) Anmeldenummer: 98113632.8
(22) Anmeldetag: 22.07.1998
(51) Int. Cl.: G01B 5/008

(54) **Verfahren und Vorrichtung zur lagegenauen Anordnung von Kraftfahrzeugteilen, insbesondere von Karosseriebauteilen auf einem Strukturcubing**

(30) Priorität: 10.09.1997 DE 19739658
(71) Anmelder: Dr.Ing.h.c. F. Porsche Aktiengesellschaft, 70435 Stuttgart (DE)
(72) Erfinder: Karrenbauer, Uwe, 70839 Gerlingen (DE)

(57) **Zusammenfassung**

Das Verfahren und die Vorrichtung dienen dazu, Karosserieteile hinsichtlich ihrer Anordnung zueinander sowohl optisch als auch über Messungen zu überprüfen, ob die Teile im Fügebereich spaltmäßig spannungsfrei zueinander liegen. Wenn die Karosserieteile im Fügebereich nicht aufeinanderliegen, wird eine Überprüfung mittels einer am Strukturcubing angeordneten Meßeinrichtung vorgenommen.

## Beschreibung

Die Erfindung bezieht sich auf ein Verfahren und eine Vorrichtung zur lagegenauen Anordnung von Kraftfahrzeugteilen, insbesondere von Karosseriebauteilen auf einem Strukturcubing nach den Ansprüchen.

Aus der DE 44 14 747 A1 ist ein Meßwerkzeug, insbesondere für die Flächenvermessung bekannt, das in einer Meßmaschine gehalten ist. Diese ist an einer Meßplatte längsverschiebbar angeordnet und umfaßt eine vertikale Säule an der ein horizontal verschiebbarer Arm verstellbar gehalten ist. Am Arm ist endseitig das Meßwerkzeug mit einem Taststift angeordnet. Die mittels des Meßtasters kontaktierten Meßpunkte am Werkstück ergeben Messungen, die als Information zu einem Rechner geliefert werden. Dieser verarbeitet die Information für einen späteren Gebrauch.

Aufgabe der Erfindung ist es, ein Verfahren und eine Vorrichtung zur Durchführung des Verfahren zur lagegenauen Anordnung von Kraftfahrzeugteilen, insbesondere von Karosseriebauteilen auf einem Strukturcubing zu schaffen, mit dem und der in einfacher Weise Fügefehler von zusammengesetzten Karosserieteilen ermittelbar und ursächlich behebbar sind.

Diese Aufgabe wird erfindungsgemäß durch die Merkmale der Ansprüche 1 bis 6 gelöst.

Die mit der Erfindung hauptsächlich erzielten Vorteile bestehen darin, daß die Meßeinrichtung an einem auf einem fahrbaren Aufbaurahmen angeordneten Strukturcubing anzuordnen ist, der zu überprüfende Karosserieteile in Vorrichtungen aufnimmt. Auf dem Strukturcubing wird in einem ersten Schritt durch Inaugenscheinnahme beurteilt, ob die Karosserieteile eines Kraftfahrzeuges, beispielsweise in Fügebereichen, spannungsfrei zueinander liegen, damit eine einwandfreie Schweißverbindung ohne Verzug der zu verbindenden Teile und ohne Schwierigkeiten durchführbar ist.

Wenn dagegen festgestellt wird, daß die Fügebereiche der Karosserieteile nicht zufriedenstellend zueinander liegen, wird über die am Aufbaurahmen installierte Meßeinrichtung gezielt gemessen, welche Karosserieteile einen Fehler hinsichtlich Lage oder Teilemeßgenauigkeit aufweisen.

Diese sogenannte Fehleranalyse kann in vorteilhafter Weise mittels der in allen Richtungen verstellbaren Meßeinrichtung erfolgen, die mit einem Rechner gekoppelt ist, in dem die entsprechenden Meßdaten bzw. Meßpunkte der Karosserieteile gespeichert sind und somit ein sofortiger Abgleich hinsichtlich der Karosserieteile entweder in der Lage zueinander oder in der Teilegenauigkeit erfolgen kann.

Vereinfacht wird das Überprüfen dieser Karosserieteile insofern, weil die aufgebauten Karosserieteile auf dem Strukturcubing zum Messen, wie nach dem Stand der Technik, nicht auf eine Meßplatte verbracht werden müssen, sondern direkt Messungen an der Vorrichtung des Strukturcubings durchgeführt werden können und somit zusätzliche Einrichtarbeiten entfallen. Es wird hierdurch ein autarkes System geschaffen.

Hierzu ist die Meßeinrichtung in vorteilhafter Weise über eine Führungsschiene am Aufbaurahmen des Strukturcubings gelagert und längsverschiebbar. Sie besteht vorzugsweise aus an einem Schlitten befestigten Ständer, an dem wiederum ein Galgenträger gehalten ist, der einen vertikal ausgerichteten Arm trägt, welcher die Meßmaschine und den Meßtaster hält. Der Meßtaster ist vorzugsweise aus einem winkelbeweglichen Armsystem bestehend. Diese Ausstattung der Meßeinrichtung ermöglicht eine Verstellung in Hochrichtung sowie ein Verschwenken um vertikale Achsen, so daß jeder Meßpunkt an den aufgespannten Karosserieteilen bzw. an dem Strukturcubing erreichbar ist.

Die Führungsschiene am Aufbaurahmen des Strukturcubings ist angeschraubt und besteht beispielsweise aus zwei übereinander angeordneten Führungsbahnen, in welchen der Schlitten mit seinen korrespondierenden Führungsschienen in Eingriff steht. Durch die Verfahrbarkeit des Strukturcubings mit Meßeinrichtung ist eine große Flexibilität gegeben, da die Anwendung in jedem Bereich einer Werkstatt bzw. einer Produktionslinie erfolgen kann. Zum Messen wird der Strukturcubing mit dem Aufbaurahmen festgesetzt.

Die eingeschränkte Verwendbarkeit einer Meßplatte nach dem Stand der Technik, welche nur stationär anzuordnen ist, wird durch den Strukturcubing mit verbundener Meßeinrichtung vermieden. Auch wird die nachteilige Verwendung einer dem Strukturcubing zugeordneten Meßeinrichtung auf einem beigeordneten Gestell vermieden, da hierdurch besondere aufwendige Einstellungen erforderlich werden.

Ein Ausführungsbeispiel der Erfindung ist in den Zeichnungen dargestellt und wird im folgenden näher beschrieben.

Es zeigen
- Fig. 1: eine schematische Darstellung einer Meßeinrichtung an einem Aufbaurahmen eines Strukturcubings,
- Fig. 2: eine Ansicht in Pfeilrichtung A auf die Stirnseite einer Führungsschiene am Aufbaurahmen,
- Fig. 3: eine schaubildliche Darstellung eines Strukturcubings mit aufgespanntem Karosserieteil und einer Meßeinrichtung,
- Fig. 4: eine beispielshafte schematische Darstellung von zwei zu verbindenden Karosserieteilen mit möglichen Meßpunkten und
- Fig. 5: einen Schnitt nach der Linie V-V der Fig. 4.

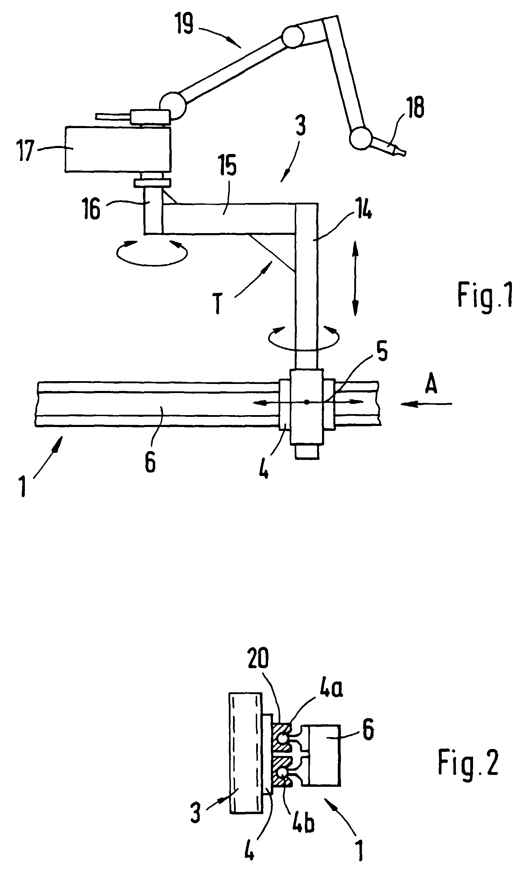

Wie in Fig. 1 näher dargestellt, ist an einem Aufbaurahmen 1 eines Strukturcubings 2, eine Meßeinrichtung 3 über einen Schlitten 4 längsverschiebbar in Pfeilrichtungen 5 gehalten.

Der Aufbaurahmen 1 umfaßt im wesentlichen außenliegende Längsträger 6 und Querträger 7, und ist über Rollen 8 verfahrbar und mittels Ständer 9 ortsfest am Boden abzustützen und festzusetzen. Auf diesem Rahmen 1 ist der Strukturcubing 2 gehalten. Dieser umfaßt Aufnahmevorrichtungen für Karosserieteile 11, 12, welche lagegenau, wie in einem Fahrzeug, anzuordnen sind und in Meßpunkten 13 abgestützt werden. Diese Meßpunkte 13 sind in einem der Meßeinrichtung zugeordneten Rechner eingespeichert, so daß über die Meßeinrichtung 3 jeder Meßpunkt 13 bzw. jedes Karosserieteil auf Maßgenauigkeit überprüfbar ist.

Die Meßeinrichtung 3 ist mittels des Schlittens 4 am Längsträger 6 des Aufbaurahmens 1 gehalten. Der Schlitten 4 weist beispielsweise zwei Führungen 4a und 4b auf, die in übereinander angeordneten Führungen einer Schiene 20 vorgesehen sind. Die Schiene 20 ist mit dem Längsträger 6 des Aufbaurahmens 1 lösbar verbunden.

Die Meßeinrichtung 3 ist aus einem Trägersystem T gebildet und umfaßt einen vertikal ausgerichteten Ständer 14, der im Schlitten 4 drehbar und vertikal verstellbar gehalten ist. Mit diesem Ständer 14 ist ein Galgenträger 15 fest verbunden, der endseitig einen vertikal ausgerichteten Arm 16 zur Aufnahme einer Meßmaschine 17 aufweist, welcher um 360° verschwenkbar ist. An der Meßmaschine 17 ist der eigentliche Meßtaster 18 über ein winkelbewegliches Armsystem 19 gehalten.

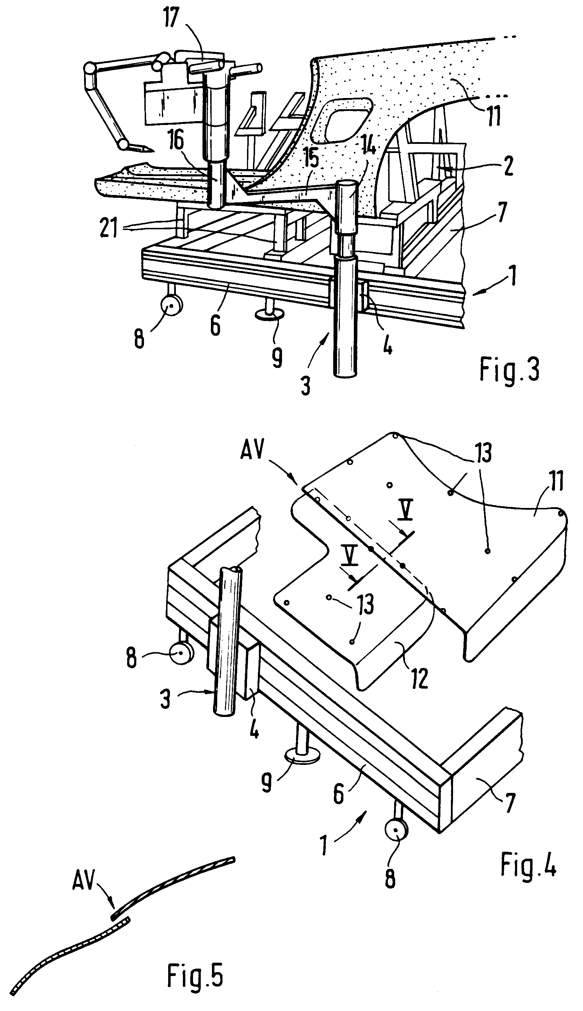

Wie in Fig. 3 schematisch in Zusammenschau mit Fig. 4 näher dargestellt ist, sind beispielsweise die Karosserieteile 11, 12 über die Aufnahmevorrichtungen 21 des Strukturcubings 2 lagegenau, wie in einem Fahrzeug, angeordnet. Um Anschluß-Verbindungen AV bzw. Fügeverbindungen überprüfbar zu machen, werden die Karosserieteile 11, 12 in den Strukturcubing 2 eingelegt. Bei Unregelmäßigkeiten in den Bereichen der Anschluß-Verbindungen AV werden über die Meßeinrichtung 3 und insbesondere über den Meßtaster 18 die entsprechenden Meßpunkte 13 überprüft.

In Fig. 4 ist eine mangelhafte Anschlußverbindung AV gezeigt, die wie im Schnitt Fig. 5 zu erkennen ist, auseinanderklafft, so daß bei einem Zusammenpunkten entweder die Teile zueinander verzogen und maßungenau werden oder aber die Punktschweißung nicht qualitätsgerecht durchzuführen ist.

Eine Überprüfung der Anschlußverbindung AV erfolgt in einem ersten Schritt durch Inaugenscheinnahme, in einem zweiten Schritt wird mittels der Meßpunkte 13 überprüft und in einem dritten Schritt wird die Ursache ermittelt, so daß mittels dieses Verfahrens zur lagegenauen Anordnung der Kraftfahrzeugteile, in der Serienproduktion keine unzureichend zueinander angeordneten Karosserieteile, insbesondere im Fügebereich vorkommen und qualitätsgerechte Schweißverbindungen oder sonstige Verbindungen hergestellt werden.

## Patentansprüche

1. Verfahren zur Überprüfung einer fügegenauen Anordnung von Kraftfahrzeugteilen zum Verbinden, insbesondere von Karosseriebauteilen (11, 12) auf einem Strukturcubing (2), wobei die Teile (11, 12) in Aufnahmevorrichtungen (21) mit definierten Meßpunkten (13) angeordnet und gelagert sind und die Teile mittels einer am Strukturcubing (2) gehaltenen Meßeinrichtung (3) auf Fehler analysierbar sind.

2. Verfahren nach Anspruch 1, dadurch gekennzeichnet, daß die Karosserieteile (11, 12) in Bereichen ihrer Anschluß- bzw. Füge-Verbindungen (AV) mittels eines auf die einzelnen Meßpunkte (13) der Bauteile (11, 12) bzw. des Strukturcubings (2) eingestellten Rechners über eine Meßmaschine (17) der Meßeinrichtung (3) überprüfbar sind.

3. Vorrichtung zur Durchführung des Verfahrens nach den Ansprüchen 1 oder 2, dadurch gekennzeichnet, daß die Meßeinrichtung (3) eine am Längsrahmen (6) eines Aufbaurahmens (1) des Strukturcubings (2) verschiebbar gehaltenes und ein um mindestens drei Achsen schwenkbares Trägersystem (T) mit einem Meßtaster (18) einer Meßeinrichtung (3) und einer Meßmaschine (17) umfaßt, die mit dem Rechner verbunden ist.

4. Vorrichtung zur Durchführung des Verfahrens nach den Ansprüchen 1 oder 2, dadurch gekennzeichnet, daß am Längsrahmen (6) eine Laufschiene (20) befestigt ist, in welcher ein Schlitten (4) der Meßeinrichtung (3) in Längsrichtungen (5) verschiebbar ist, wobei im Schlitten (4) des Trägersystem (T) ein Ständer (14) der Meßeinrichtung (3) in Hochrichtung verstellbar und um mindestens 360° verschwenkbar angeordnet ist und an dem ein Galgenträger (15) gehalten wird, der einen vertikalen Arm (16) zur Aufnahme einer Meßmaschine (17) aufweist und um mindestens 360° verschwenkbar ist.

5. Vorrichtung nach den Ansprüchen 1, 2, 3 oder 4, dadurch gekennzeichnet, daß der Schlitten (4) über zwei übereinander angeordneten Führungen (4a, 4b) in der Laufschiene (20) am Aufbaurahmen (1) längsverschiebbar ist.

6. Vorrichtung nach den Ansprüchen 1, 2, 3, 4 oder 5, dadurch gekennzeichnet, daß die Laufschiene (20) mit Meßeinrichtung (3) eine umsetzbare Baueinheit bildet, wobei die Schiene (20) am Aufbaurahmen (1) lösbar befestigt ist.
